# EUROPEAN PATENT SPECIFICATION

(11) **EP 3 033 654 B1**
(45) Date of publication and mention of the grant of the patent: **18.09.2019**
(21) Application number: 14761699.9
(22) Date of filing: 13.08.2014
(51) Int. Cl.: G05B 19/042, A01G 25/16

(54) **INTELLIGENT GROUNDS MANAGEMENT SYSTEM**
INTELLIGENTES BODENVERWALTUNGSSYSTEM
SYSTÈME INTELLIGENT DE TRAITEMENT DE SOLS

(30) Priority: 16.08.2013 US 201361866816 P
(43) Date of publication of application: 22.06.2016
(73) Proprietor: Husqvarna AB, 561 82 Huskvarna (SE)
(72) Inventor: LAMELI, Peter, 72622 Nürtingen (DE); JÄGENSTEDT, Patrik, S-56027 Tenhult (SE); ALEXIUSSON, Mikael, S-52338 Ulricehamn (SE); SCHIEDT, Christoph, 88483 Burgrieden (DE); WIETELMANN, Sven, 89079 Ulm (DE); WILLGERT, Mikael, S-16354 Spånga (SE); GRUFMAN, Stefan, S-56434 Bankeryd (SE); DERNEBO, Lars, S-59933 Ödeshög (SE); LARSÉN, Martin, S-55457 Jönköping (SE); MATTSSON, Anders, S-52333 Ulricehamn (SE)
(74) Representative: Finkele, Rolf
(86) International application number: PCT/IB2014/063898
(87) International publication number: WO 2015/022654

(56) References cited:
- WO-A2-2005/002321
- US-A1- 2009 216 345
- US-A1- 2013 173 070
- US-B1- 7 203 576
- US-B1- 7 584 023

## Description

### TECHNICAL FIELD

Example embodiments generally relate to intelligent systems and, more particularly, relate to a system for managing sensors and/or outdoor equipment to provide monitoring and grounds care servicing.

### BACKGROUND

Grounds care maintenance tasks may include lawn care and/or gardening tasks related to facilitating growth and manicuring the lawns or gardens that hopefully prosper as a result of those efforts. Facilitating growth has commonly required individuals to focus routine attention on ensuring growing conditions are appropriate for the vegetation being grown, and on providing the necessary care and grooming tasks to further enhance growth.

As technological capabilities have improved, various devices or sensors have been developed that are capable of employment to monitor various aspects of growing conditions. Gardeners have therefore been enabled to employ the sensors or devices in specific locations to monitor and correct, if needed, the growing conditions. However, even with the improvement of monitoring devices or sensors, gardeners are still often required to employ a high degree of manual interaction to place and/or operate the devices or sensors.

US 7 203 576 B1 discloses timers for controlling an operation of irrigation systems.

WO 2005/002321 A2 discloses an automated irrigation system. Thereby, a communication system is used for selectively controlling multiple zones and delivering a selectable water amount.

### BRIEF SUMMARY OF SOME EXAMPLES

Some example embodiments may therefore provide a capability for intelligent control or management of a number of assets in connection with yard maintenance. Thus, for example, sensor equipment and task performance equipment operation may be coordinated for efficient gardening and lawn care.

According to an example embodiment, a system for providing control of garden assets is provided. The system may include sensor equipment, task performance equipment, and a yard maintenance manager. The sensor equipment may include one or more sensors disposed on a parcel of land. The task performance equipment may be configured to perform a task on the parcel. The task may be associated with generating a result that is enabled to be monitored via the sensor equipment. The yard maintenance manager may be configured to interface with the sensor equipment and the task performance equipment to compare measured conditions with desirable conditions to direct operation of the task performance equipment.

According to another example embodiment, a method of providing control over garden assets is provided. The method may include receiving sensor data from sensor equipment including one or more sensors disposed on a parcel of land, determining current conditions on the parcel based on the sensor data, and comparing the current conditions to desirable conditions associated with vegetation planted on the parcel of land. The method may further include providing at least one instruction relative to operation of task performance equipment configured to perform a task on the parcel where the task is associated with generating a result that is enabled to be monitored via the sensor equipment.

Some example embodiments may improve the ability of operators to maximize the beauty and productivity of their yards and gardens, but do so in a cost effective and environmentally friendly way.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a block diagram of a system in accordance with an example embodiment;
FIG. 2 illustrates a diagram of a parcel that is divided into various zones according to an example embodiment;
FIG. 3 illustrates a simple water migration path with power provided to sensors remotely according to an example embodiment;
FIG. 4 illustrates an alternative water migration path where power is provided to sensor equipment and task performance equipment via an integrated electric and water provision system according to an example embodiment;
FIG. 5 illustrates a modified example embodiment in which the communication with the yard maintenance manager is further illustrated according to an example embodiment;
FIG. 6 illustrates a block diagram of a system having task performance equipment control circuitry integrated into the yard maintenance manager in accordance with an example embodiment;
FIG. 7 illustrates a block diagram of a method according to an example embodiment; and
FIG. 8 illustrates a hose or pipe with integrated electrical wires in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. Additionally, the term "yard maintenance" is meant to relate to any outdoor grounds improvement or maintenance related activity and need not specifically apply to activities directly tied to grass, turf or sod care. Thus, yard maintenance should be appreciated to encompass gardening, lawn care, combinations thereof, and/or the like. As used herein, operable coupling should be understood to relate to direct or indirect connection that, in either case, enables functional interconnection of components that are operably coupled to each other.

Example embodiments may provide a comprehensive system for monitoring yard conditions (i.e., lawn and/or garden conditions) at any of what may potentially be a number of locations throughout a particular parcel, and performing tasks relative to those locations. In this regard, for example, the system may utilize a communication network that gathers information on growing conditions from sensor equipment for association of the information with the areas from which the information was gathered. The system may also employ processing circuitry to associate a set of optimal or desirable growing condition parameters with the various areas. When the information is received describing the growing conditions of the various areas, the processing circuitry may compare the growing conditions (i.e., current conditions) to the growing condition parameters (i.e., desired conditions) to determine whether and to what extent corrective actions may be needed to improve the growing conditions. The processing circuitry may then communicate with an owner/operator to suggest or provide instruction for improvement of the growing conditions. Alternatively or additionally, the processing circuitry may interact with task performance equipment via the communication network (or a separate network) to direct efforts to improve the growing conditions.

The system may generally employ a collection of fixed sensors that gather data that relates to specific segments of the parcel that may correspond to each respective one of the various areas mentioned above. The specific segments may have different types of plants therein, and therefore may optimally have different growing conditions desirable in connection with each respective one of the segments. The owner/operator may define the specific segments, which may be referred to as "zones," and identify the plants associated with each zone or the growing conditions desired for each zone using an application configured to facilitate such definition. In some cases, the processing circuitry may be equipped to correlate desirable growing conditions to an identified plant species based on stored information associated with each plant species from a database or online resource. Accordingly, each zone will have corresponding growing condition parameters associated therewith (perhaps based on the plants therein), and the growing condition parameters may define the desired growing conditions (e.g., any or all of moisture level, temperature, lighting level, pH, and/or the like) for the corresponding zone. In some cases, the zones may further be associated with the corresponding task performance equipment that may be employed to alter the growing conditions in the respective zones. The task performance equipment may be listed in association with each zone for which the equipment may provide services (e.g., in a resource list). The processing circuitry may then either direct operation of assets from the resource list to achieve a desired outcome or may provide instructions or suggestions to the owner/operator regarding the assets from the resource list that could be employed to achieve a desired outcome based on a comparison of the measured or current conditions to the growing condition parameters associated with the plants in the zone. Alternatively, the processing circuitry may merely inform the owner/operator of the situation, and the owner/operator may be relied upon to take corrective actions or enhancement actions as appropriate.

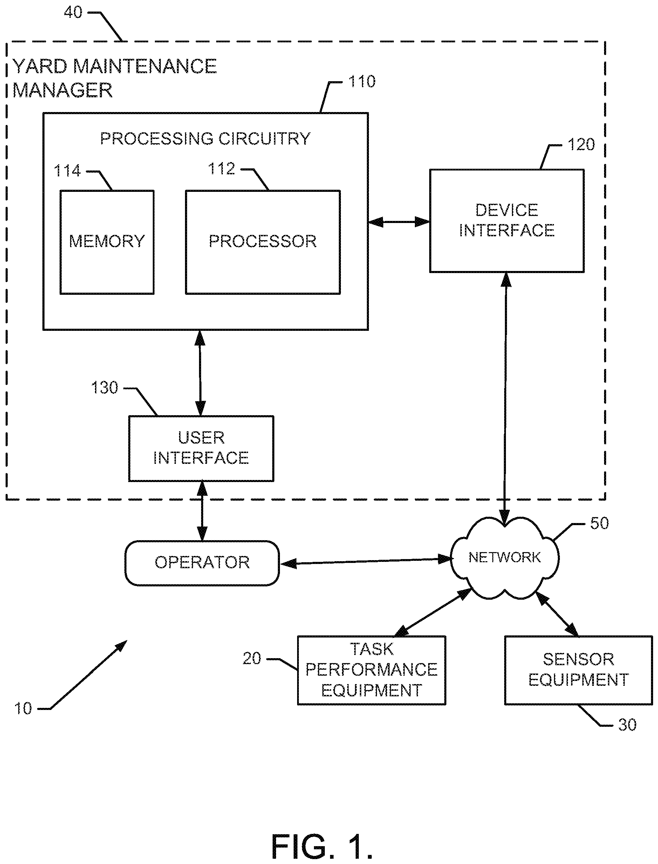

FIG. 1 illustrates a block diagram of a system 10 that may be employed to accomplish the basic operations described above in accordance with an example embodiment. Within the context of FIG. 1, it should be appreciated that certain tasks, like grass cutting, are typically performed by lawn mowers, which could be walk behind, ride on, or robotic models. Tasks such as soil preparation may be performed or enhanced using tillers. Still other tasks, like lawn watering, may be performed by sprinkler heads at fixed locations or by the transportation of water via hoses to desired locations. Other tasks may also be performed such as, wildlife dispersion, providing light, blocking light or otherwise improving light conditions, and adding fertilizer or other components to alter the soil. These tasks may be performed by, or in connection with, devices that are fixed within the parcel (e.g., sprinkler heads, lighting units, etc.), or they may be performed by mobile task performance equipment that is manually or automatically operated (e.g., robots, tillers, mowers and the like). All such devices may represent examples of task performance equipment 20 that may be used to accomplish functional tasks relative to yard maintenance activities. The task performance equipment 20 may therefore serve as the assets or resources that may be used to achieve desired outcomes within the context of the system 10.

Meanwhile, various sensors may be employed by insertion of such sensors into soil for monitoring growing conditions (e.g., lighting levels, moisture levels, pH, temperature, etc.). The sensors could be placed at different soil depths or in different locations dependent upon the specific types of vegetation that are planted in a given zone. Other sensors (e.g., cameras) may be provided to obtain video or image data to facilitate improving growing conditions as well. In some cases, for example, sensors could be placed proximate to the task performance equipment 20 that performs the function that the corresponding sensors are designed to monitor. Regardless of the specific configuration or placement paradigm, the various sensors may represent sensor equipment 30, as described above.

The sensor equipment 30, and in some cases also one or more of the devices that comprise the task performance equipment 20, may be in communication with a yard maintenance manager 40 via a network 50. The network 50 may be a data network, such as a local area network (LAN), a metropolitan area network (MAN), a wide area network (WAN) (e.g., the Internet), a wireless personal area network (WPAN), and/or the like, which may couple client devices (e.g., the sensor equipment 30 and/or the task performance equipment 20) to devices such as processing elements (e.g., personal computers, server computers or the like) and/or databases such as the yard maintenance manager 40. Communication between the network 50, the client devices and the devices or databases (e.g., servers) to which the client devices are coupled may be accomplished by either wireline or wireless communication mechanisms and corresponding communication protocols. As such, for example, some or all of the sensors of the sensor equipment 30 may be connected to the yard maintenance manager 40 by wire and/or be wireless communication means. Meanwhile, some or all of the devices of the task performance equipment 20 may be connected to the yard maintenance manager 40 by wire or by wireless communication means. As such, for example, a remote terminal may be connected to the yard maintenance manager 40 by wire and/or wireless communication means. Accordingly, the yard maintenance manager 40 may monitor growing conditions, perhaps on a zone by zone basis, and direct the operation of task performance equipment 20 to improve growing conditions or otherwise facilitate plant growth.

As shown in FIG. 1, the yard maintenance manager 40 may include processing circuitry 110 that may be configured to perform data processing, control function execution and/or other processing and management services according to an example embodiment of the present invention. As such, it may be appreciated that the yard maintenance manager 40 could be embodied as a computer, smart phone, server, or other computing device. In some embodiments, the processing circuitry 110 may be embodied as a chip or chip set. In other words, the processing circuitry 110 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 110 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 110 may include one or more instances of a processor 112 and memory 114 that may be in communication with or otherwise control a device interface 120 and, in some cases, a user interface 130. As such, the processing circuitry 110 may be embodied as a circuit chip (e.g., an integrated circuit chip) configured (e.g., with hardware, software or a combination of hardware and software) to perform operations described herein. In some embodiments, the processing circuitry 110 may communicate with electronic components of the sensor equipment 30 and the task performance equipment 20 via the network 50 (which may include one or more communication networks) via the device interface 120 and/or the network 50. The network 50 may be localized such that it is associated with a single parcel, or may extend over and include a plurality of parcels. Moreover, in some cases, the network 50 may represent different networks or sub-networks. Thus, in some cases, one short range communication network may be used to communicate data between sensors of the sensor network 30 and the yard maintenance manager 40 and another network may be used to communicate data or instructions between the yard maintenance manager 40 and the task performance equipment 20. Moreover, in some cases, still another network may be used to communicate data or instructions between the yard maintenance manager 40 and the owner/operator (e.g., via the computer or smart phone of the owner/operator).

The user interface 130 (if implemented) may be in communication with the processing circuitry 110 to receive an indication of a user input at the user interface 130 and/or to provide an audible, visual, mechanical or other output to the user (i.e., the owner/operator). As such, the user interface 130 may include, for example, a display, one or more buttons or keys (e.g., function buttons or a keyboard), and/or other input/output mechanisms (e.g., microphone, speakers, cursor, joystick, lights and/or the like). The user interface 130 may be configured to provide alerts, warnings and/or notifications to the user or operator responsive to various trigger conditions being detected (e.g., via the sensor equipment 30 or other components). In some cases, the user interface 130 may be configured to generate such alerts, warnings and/or notifications in response to plant growing conditions being out of specification or out of recommended ranges. System malfunctions, damage or tampering with equipment, equipment theft and other component related stimuli may also be defined as triggers for generation of the alerts, warnings and/or notifications. The alerts, warnings and/or notifications may be generated via light, sound, visual display, or other devices that may be connected to or part of the yard maintenance manager 40. In some cases, the notifications may be provided by text message or email.

The device interface 120 may include one or more interface mechanisms for enabling communication with other devices directly or via the network 50. In some cases, the device interface 120 may be any means such as a device or circuitry embodied in either hardware, or a combination of hardware and software that is configured to receive and/or transmit data from/to sensors of the sensor equipment 30 and/or devices of the task performance equipment 20 in communication with the processing circuitry 110 by virtue of the device interface 120 being capable of sending and receiving messages via the network 50. In some example embodiments, the device interface 120 may provide interfaces for communication of components internal to the system 10 with components external to the system 10. For example, in an embodiment in which the yard maintenance manager 40 is embodied as a computer or a server, the device interface 120 may enable communication (e.g., via the internet or wireless communication methods) with a smart phone of the owner/operator. This communication may also occur via the network 50 (or via a sub-network of the network 50) in some cases. However, it should also be appreciated that the owner/operator may directly interact with the yard maintenance manager 40 via the user interface 130.

The processor 112 may be embodied in a number of different ways. For example, the processor 112 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 112 may be configured to execute instructions stored in the memory 114 or otherwise accessible to the processor 112. As such, whether configured by hardware or by a combination of hardware and software, the processor 112 may represent an entity (e.g., physically embodied in circuitry - in the form of processing circuitry 110) capable of performing operations according to embodiments of the present invention while configured accordingly. Thus, for example, when the processor 112 is embodied as an ASIC, FPGA or the like, the processor 112 may be specifically configured hardware for conducting the operations described herein. Alternatively, as another example, when the processor 112 is embodied as an executor of software instructions, the instructions may specifically configure the processor 112 to perform the operations described herein.

In an example embodiment, the processor 112 (or the processing circuitry 110) may be embodied as, include or otherwise control the yard maintenance manager 40. As such, in some embodiments, the processor 112 (or the processing circuitry 110) may be said to cause each of the operations described in connection with the yard maintenance manager 40 by directing the yard maintenance manager 40 to undertake the corresponding functionalities responsive to execution of instructions or algorithms configuring the processor 112 (or processing circuitry 110) accordingly. As an example, the yard maintenance manager 40 may be configured to receive sensor information from the sensor equipment 30 and make decisions regarding information to be provided to the owner/operator and/or instructions to be provided to task performance equipment 20. The processing circuitry 110 may, in some cases, process the condition information received from the sensor equipment 30 and compare the condition information to growing condition parameters that are stored in the memory 114 for a given zone to determine whether an action should be take or recommended based on the comparison.

In an exemplary embodiment, the memory 114 may include one or more non-transitory memory devices such as, for example, volatile and/or non-volatile memory that may be either fixed or removable. The memory 114 may be configured to store information, data, applications, instructions or the like for enabling the yard maintenance manager 40 to carry out various functions in accordance with exemplary embodiments of the present invention. For example, the memory 114 could be configured to buffer input data for processing by the processor 112. Additionally or alternatively, the memory 114 could be configured to store instructions for execution by the processor 112. As yet another alternative, the memory 114 may include one or more databases that may store a variety of data sets responsive to input from the sensor network. Among the contents of the memory 114, applications may be stored for execution by the processor 112 in order to carry out the functionality associated with each respective application. In some cases, the applications may include providing the operator with the ability to define work zones and associate the work zones with either plants therein, or growing conditions suitable for plants therein. The applications may also be configured to perform a comparison of information indicative of current growing conditions detected in a zone to stored information about growing condition parameters that are desired for the vegetation that is in the zone. As indicated above, the growing condition parameters may be entered by the operator or may be extracted or retrieved from databases or sources accessible via the internet based on entry of an identity of the plant vegetation in a given zone.

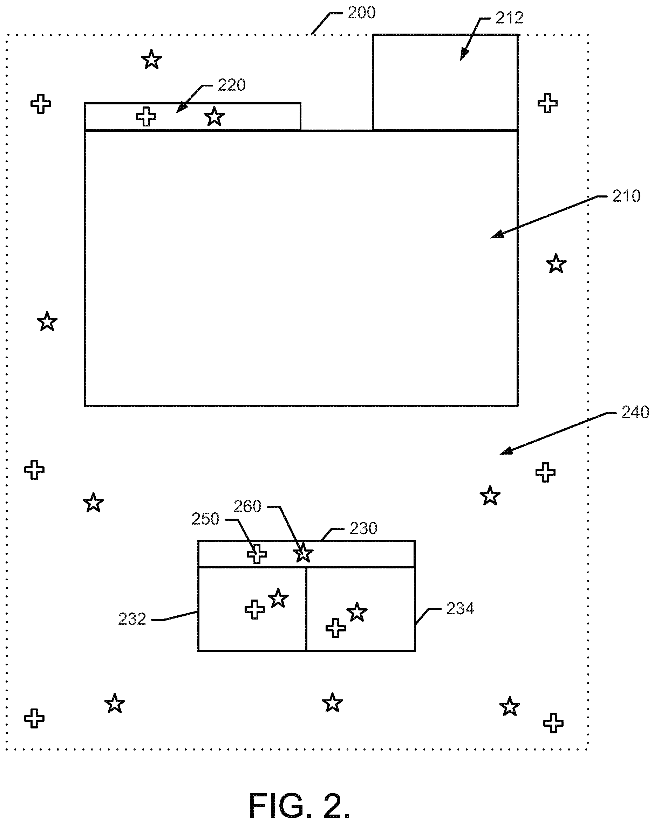

As mentioned above, the parcel (or parcels) for which the yard maintenance manager 40 provides service may be divided into zones. Each zone could be monitored and managed based on the specific different growing conditions that are desirable for the vegetation provided therein. FIG. 2 illustrates a diagram of a parcel 200 that is divided into various zones. Some of the zones may be active zones while other zones may be inactive zones. Active zones may be zones that include or otherwise permit access to the sensor equipment 30 and/or the task performance equipment 20. The inactive zones may be zones that either do not include or do not permit access to the sensor equipment 30 and/or the task performance equipment 20, or areas for which, regardless of the capability for monitoring and task performance, management of such activities is not desired. As such, for example, an inactive zone may include an area that is covered by a house, concrete, pavement, or land that is fallow or simply not desired for active management. In FIG. 2, a first inactive zone 210 is defined to outline the footprint of a house, and a second inactive zone 212 is defined to outline the footprint of a driveway leading to the house.

A first active zone 220 is provided at the front of the house and may represent a plant bed. A second active zone 230, a third active zone 232 and a fourth active zone 234 are provided in the back yard and may represent a garden. The remainder of the yard may represent a fifth active zone 240. Of note, in this example, the first active zone 220 covers a relatively large portion meant to represent the entire plant bed. Meanwhile, the fifth active zone 240 represents the entire yard that is not either inactive or associated with the garden. However, these segmentation examples are merely exemplary in order to present a relatively simple example to facilitate explanation of one example embodiment. Thus, it should be appreciated that the plant bed and the yard could further be broken up into one or more other (e.g., smaller) zones, if desired. Similarly, although the garden is broken up into smaller zones in this example, it should be appreciated that the garden could be further broken up as well. Moreover, individual plants, rows of plants and/or the like, could be designated to form their own zones in some cases. Likewise, within the yard, one or more trees, hedges, bushes or other specific plants or plant groups could be identified as their own respective zones (or sub-zones).

The zones may be programmed into the yard maintenance manager 40 and the yard maintenance manager 40 may also be aware of the sensor equipment and task performance equipment that is associated with each respective zone. In some cases, the zones may simply be identified and a corresponding association with assets (e.g., sensors and task performance equipment) may also be programmed to correlate each asset to one of the zones (or multiple ones of the zones) without any need for association of the zones with any map data. However, in some embodiments, the parcel 200 may be defined in terms of corresponding map data and the zones may be defined with respect to the map data. In such an example, a display similar to that illustrated in FIG. 2 may be provided to represent the parcel 200. In examples where map data is not desired or otherwise used, the image of FIG. 2 may merely represent the physical layout of the assets, but the yard maintenance manager 40 need not necessarily have an appreciation for the actual geographical layout. Instead, the yard maintenance manager 40 may be configured to just maintain data associations between information received, the zones to which the data correlates, and the assets in the zones. As mentioned above, the yard maintenance manager 40 may also have the ability to record (or retrieve) information regarding desirable growing conditions where such information is either programmed directly by the operator or is accessed based on an identification of the plant life that resides within the corresponding zone.

In some embodiments, for example, the memory 114 may store a parcel descriptor file including map data defining boundaries of the parcel 200, boundaries of the zones and/or location information identifying the location of assets (e.g., sensor equipment 30 and task performance equipment 20) located on the parcel 200. In some cases, the locations and/or boundaries may be identified based on GPS coordinates, triangulation using radio becons or distance/direction from another known locations, objects or positions. Image data may be used to confirm or assist in finding boundaries in some situations. Alternatively or additionally, boundary and/or location information may be learned (e.g., by a robot or other device driving or being pushed proximate to the boundary or location and noting the same (e.g., using RFID technology or the like)). When a boundary or device location is encountered, the map data of the parcel descriptor file may be accessed (via the processing circuitry 110) to record the corresponding information in association therewith. As such, in some embodiments, the boundary wire defining the work area of a robot may correspond to the boundary of one or more of the zones.

Accordingly, the memory 114 may store information indicative of the zones. The information may, in some cases, include a geographic description of the zone. The information may also include a description of the plant life within the zone or a description of the growing conditions preferred for the plant life within the zone. In some cases, the sensors within the zone may be set (or recommended for setting) to a specific depth or otherwise configured in a specific way based on the plant life within the zone. For example, moisture sensors for plants with shallow roots may be kept shallow, and moisture sensors for plants with deep roots may be provided at a deeper depth. The memory 114 may store depth parameters (actual or recommended) in some cases.

In the example of FIG. 2, a fixed asset paradigm (e.g., fixed sensors and in some cases at least some fixed task performance equipment) may be employed. Accordingly, in this example, each zone may have its own corresponding fixed sensor equipment and task performance equipment associated therewith. For example, moisture sensor 250 (indicated by a cross) may be accompanied by a corresponding sprinkler 260 (indicated by a star). Other crosses may represent other sensors (e.g., moisture sensors), and other stars may represent other task performance equipment (e.g., sprinklers) associated with other zones. In such an example, each sensor may be associated with a corresponding zone, and each sprinkler may also be associated with a corresponding zone. For example, the moisture sensor 250 is associated with the second active zone 230 and the sprinkler 260 is also associated with the second active zone 230.

In some embodiments, a single sensor of any given type may be associated with a given zone. Thus, in such an example, although the second active zone 230 shows one moisture sensor 250, a pH sensor, a temperature sensor, a camera, and/or a light sensor could also be included in the second active zone 230. By providing only one sensor of any given type per zone, the sensor data gathered from each respective sensor may be easily understood to represent the conditions, relative to each condition sensed by one of the respective sensors, for the entirety of the zone. In such an example, one piece of task performance equipment of any given type may also be employed in the simplest examples (as shown for the garden and the plant bed in FIG. 2). Moreover, in some cases, there may be one piece of task performance equipment associated with each respective sensor of a given type. In fact, in some cases, there may be a limit to the distance that is permitted to be placed between a sensor of a given type (e.g., a moisture sensor) and a piece of task performance equipment that corresponds to the sensor (e.g., a sprinkler). Thus, for example, each moisture sensor may be no more than a given distance from a corresponding sprinkler, and a pairing may be made therebetween. Moreover, in some cases, the sprinkler and moisture sensor may be integrated with each other. However, it should be appreciated that, dependent upon the characteristics of the task performance equipment (and potential obstacles), it may be desirable for multiple pieces of task performance equipment to be provided in one or more of the zones, or in association with a sensor of a given type. Similarly, it may be desirable for multiple sensors to be associated with a single piece of task performance equipment.

In other embodiments, multiple sensors (even of a given type) and multiple pieces of task performance equipment (even of a given type - lighting element, watering device, fertilizer, trimmer, mower, camera, etc.) may be associated with a given zone. However, it should be appreciated that in such an embodiment, the associations of different assets within the zone may effectively (or actually) create sub-zones that can be collectively or individually managed. The fifth active zone 240 is an example of such a zone.

For physical connections made between assets, wiring and/or hose connections for power, communication or other sourcing services may be accomplished in any desirable fashion. In some cases, such connections may be programmed into or otherwise known by the yard maintenance manager 40. Wireless communications (if employed) may be accomplished by short range or other radios that may be in communication with sensors or other assets. For example, Bluetooth, WiFi, Zigbee, RFID (near field communication), GSM, or other proprietary or standard based communication mechanisms may be employed. In some embodiments, if one or more sensors are collocated with each other or with task performance equipment, a group of devices may communicate with a communication hub (which may be one of the sensors or devices) and the hub may wirelessly (or via wired connection) report data to the yard maintenance manager 40 for all such devices. Power may also be supplied locally by battery or solar cells that may be disposed proximate to one or more of the assets, or by power cables routed to one or more of the assets. In examples where boundary wires are employed, power for some devices may be provided by the boundary wires.

When the assets include sprinklers, the sprinklers may be provided with water from one or more hose or pipe connections. In some cases, multiple sprinklers may be sourced from the same hose (e.g., in series or parallel). Control over sprinkler operations may be accomplished by charging the hose without local control or by charging the hose and taking individual control over valves or actuators provided for local control of each sprinkler via electronic control.

In some examples, cabling for power and/or communication may be integrated with water hose or pipe connections. In this regard, for example, if pipe segments are employed for providing water to sprinklers, the pipe segments may be molded to have conduit or wire runs provided therein with connections between conduit or wire runs and the pipe segments when fitting is accomplished with adjacent pieces. As an alternative, if hoses are used, the hoses may have cable integrated therewith. Accordingly, regardless of the specific structure employed, both water and electrical energy/signal transfer (for power or communication purposes) may be accomplished via one integrated structure.

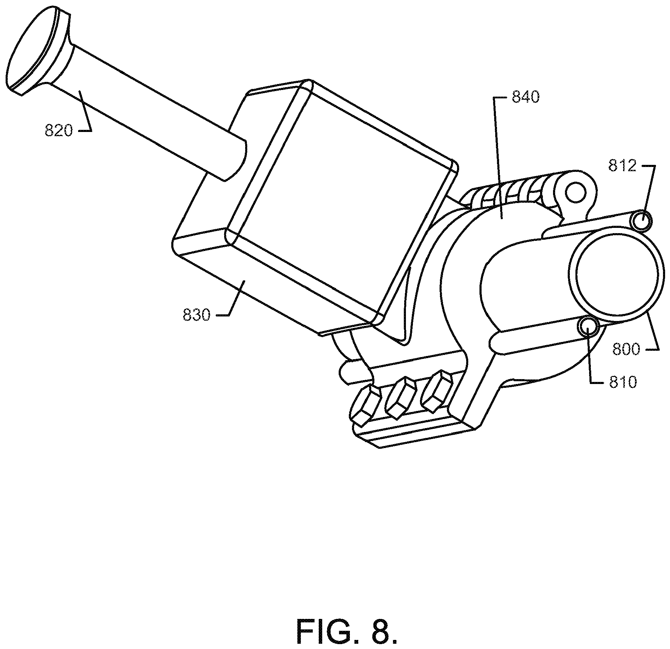

FIG. 8 illustrates an example of such a structure. In this regard, FIG. 8 illustrates a hose or pipe 800 with integrated electrical wires 810 and 812 in accordance with an example embodiment. As shown in FIG. 8, the integrated electrical wires 810 and 812 may be disposed on opposing sides of the hose or pipe 800. However, the integrated electrical wires 810 and 812 could alternatively be positioned in other orientations including next to each other. In some cases, one of the integrated electrical wires 810 and 812 may be used for power distribution and data transfer, and the other of the integrated electrical wires 810 and 812 may be used as return (ground). In some cases, a third wire may be used for separation of power distribution and data transfer, whilst a common return wire is used.

In some examples, the hose or pipe 800 may be coupled to a controllable device such as a sprinkler head 820. The sprinkler head 820 may be operable responsive to control inputs provided via a control unit 830 which could include a controllable on/off valve. The control unit 830 may operate responsive to control from a watering computer configured to control various watering devices.

In some cases, the sprinkler head 820 and control unit 830 may be mated with the hose or pipe 800 by providing a hole in a side portion of the hose or pipe 800 and providing a hinged clamp 840 to attach to the hose or pipe 800 while connecting the hole to the sprinkler head 820 and control unit 830. The hinged clamp 840 may be shaped to engage both the hose or pipe 800 and the integrated electrical wires 810 and 812.

In some embodiments, watering (or some other task) may be commenced and the system 10 may employ the sensor equipment 30 to monitor the distribution of the water (or fertilizer, etc.). The sensor equipment 30 may then be used to provide feedback via the yard maintenance manager 40 to direct more or less watering (or other resource utilization) in certain areas. The sensor equipment 30 may also be used to ensure that synchronization or sequencing can occur relative to the tasks performed on the parcel 200. For example, mowing can be secured while watering occurs in a given zone, or mowing can be planned a specific given time after watering has been accomplished. Moreover, since the sensor equipment 30 can detect natural watering (e.g., rain) and irrigation efforts, the yard maintenance manager 40 may be enabled to manage resource consumption to optimize water consumption. For example, if a rain event is detected, watering may be postponed. In some cases, the magnitude of a rain event may also be detected so that watering postponement may be accomplished for a time that is proportional to the amount of rain received. In still further examples, if the network 50 enables the yard maintenance manager 40 to obtain weather forecast information (e.g., from the Internet), then watering may be postponed even if a rain event has not yet occurred (e.g., if the rain event is forecast to occur within a given time period of an otherwise scheduled or apparently needed watering event). Thus, for example, the yard maintenance manager 40 may access weather information from sites associated with the location of the parcel 200, or the yard maintenance manager 40 may be enabled to utilize a subscription to a weather service to obtain forecast information.

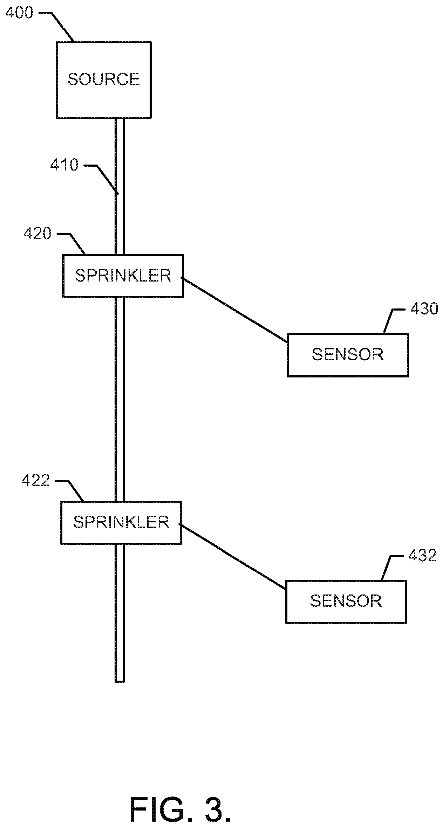

As discussed above, the sensor equipment 30 and the task performance equipment 20 may be integrated together via a number of different methods. FIGS. 3 to 5 illustrate some examples. In this regard, FIG. 3 illustrates a simple water migration path with power provided to sensors remotely (e.g., by battery or solar cell). As shown in FIG. 3, a water source 400 may be used to charge a water line 410. A first sprinkler 420 and a second sprinkler 422 may receive water from the water line 410. The water line 410 may be selectively charged to provide water for spraying from the first and second sprinklers 420 and 422. Alternatively, a local controller may be provided to be activated by wired or wireless connection from the yard maintenance manager 40. Regardless of how water is provided, each of the first and second sprinklers 420 and 422 may have a corresponding sensor (e.g., first sensor 430 and second sensor 432, respectively) associated therewith.

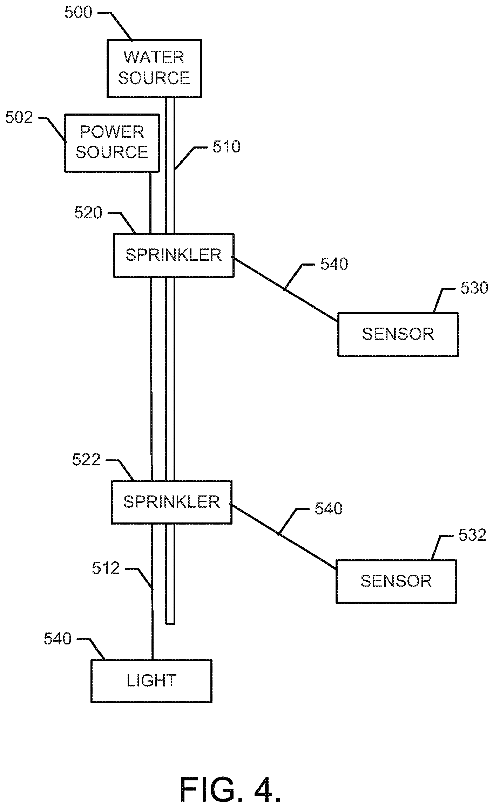

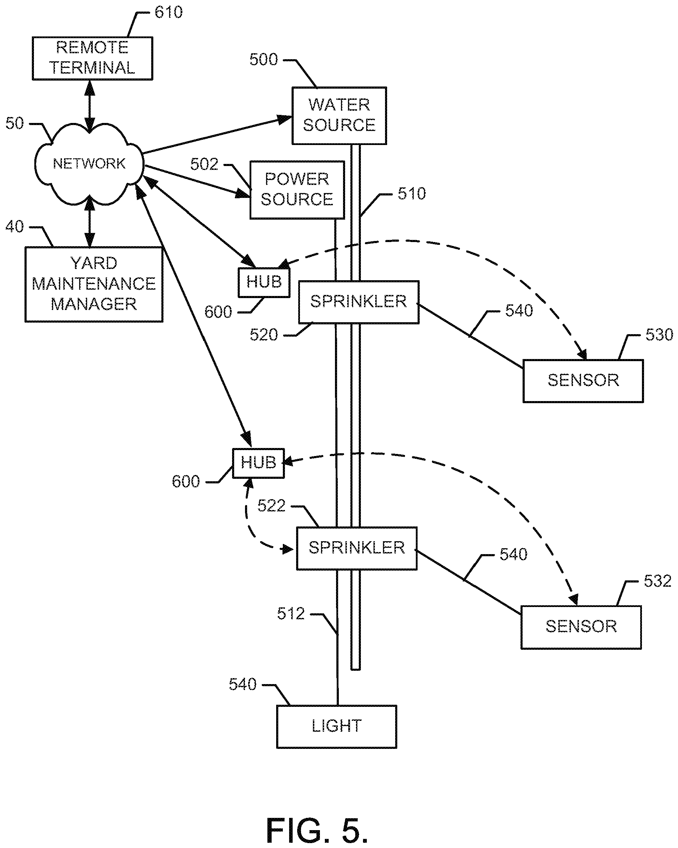

FIG. 4 illustrates an alternative water migration path where power is provided to sensor equipment and task performance equipment (e.g., sprinklers and lights such as light 540) via an integrated water line 510 and power/communication line 512. In this example, a power source 502 may be provided in addition to the water source 500. As shown in FIG. 5, the water source 500 may be used to charge the water line 510 that is integrated with the power/communication line 512. A first sprinkler 520 and a second sprinkler 522 may receive water and power/communication from the integrated water line 510 and power/communication line 512. Thus, for example, the integrated water line 510 and power/communication line 512 may represent an integrated electric and water provision system. A communication link 540 between the first and second sprinklers 520 and 522 and the first and second sensors 530 and 532, respectively, may be either a wired or wireless communication link.

FIG. 5 illustrates a modified example embodiment in which the communication with the yard maintenance manager 40 (e.g., via network 50) is further illustrated. As shown in FIG. 5, the yard maintenance manager 40 may communicate with the water source 500 and/or the power source 502 to control operation of the sprinklers and/or the sensors. However, as shown in FIG. 5, in some cases, the sprinklers and sensors that are proximate to each other may each communicate with a local hub 600. The hub 600 may then communicate with the yard maintenance manager 40 via the network 50. An operator may also interact with the system via the network using a remote terminal 610 (e.g., a computer or smart phone).

In some embodiments, conversion modules may be provided to enable backward compatibility with existing systems. In this regard, for example, where legacy equipment is already installed, RFID tags may be installed, or additional components consistent with those described herein may be installed and all converted or programmed information regarding such devices may be provided to the yard maintenance manager 40. The yard maintenance manager 40 may then operate the system in connection with the legacy equipment. The hubs 600 may be used as local communication devices or translators that can function to implement the backward compatibility.

In an example embodiment, the memory 114 may store (or the processor 112 may otherwise access) the database (e.g., a plant ID database) described above. Such database may correlate certain plants to the corresponding growing conditions that are ideal or preferred for optimal growth. As described above, current conditions may be monitored by the sensor equipment 30 and compared to the information in the database to determine any corrective action to be taken via the task performance equipment 20. Reduced costs and reduced environmental impact may therefore be achieved while achieving more optimal growing conditions.

In some cases, the yard maintenance manager 40 may take automated action to improve growing conditions by controlling watering, fertilizing, cutting, lighting or other activities based on a determination that current conditions are not optimal. However, in other situations, the yard maintenance manager 40 may be configured to provide an alert or instructions locally or via a smart phone or other remote device, to instruct or otherwise inform the owner/operator that some changes to current conditions may be advisable. The specific actions recommended may be identified, or an alert to check certain conditions may be provided. Camera data may also be used to activate certain components to chase away undesirable wild life under certain circumstances. For example, a sprinkler could be turned on to encourage a deer to move away from a plant that would otherwise be damaged from grazing. Accordingly, a relatively robust system for control of yard conditions (e.g., garden or lawn conditions) may be provided in an automated fashion. The result may be deemed to operate as a "smart garden" that provides efficient control to achieve optimal growing conditions.

In some embodiments, the operator may interact with the yard maintenance manager 40 via the user interfaces described herein or via the remote terminal 131. Some of the task performance equipment 20 may also have user interfaces. For example, a watering system may include one or more sprinklers with a common control unit that is regarded as part of the task performance equipment 20. Configuration of the common control unit or other such specific equipment may be handled locally at the equipment and then transferred to the yard maintenance manager 40 to be incorporated into the system configuration database. Thus, there may be additional user interfaces over and above those described herein.

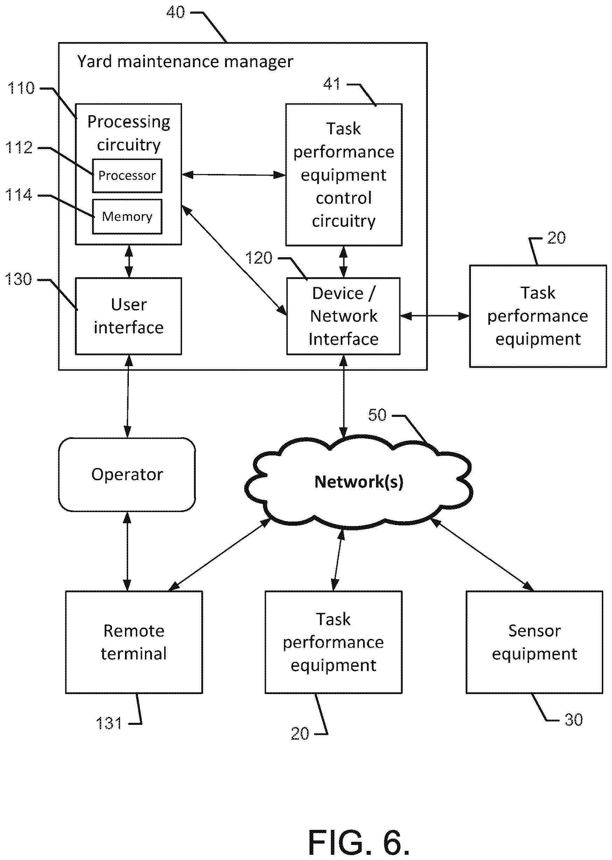

In some embodiments, the yard maintenance manager 40 may be further modified to include task performance equipment control circuitry 41 as shown in the example of FIG. 6. The task performance equipment control circuitry 41 may be embodied as or by a separate processor or may be embodied by configuration of the processing circuitry 110 of the yard maintenance manager 40. In any case, the task performance equipment control circuitry 41 may interface with the task performance equipment 20 either directly or via the network 50, as shown in FIG. 6 to control the task performance equipment 20.

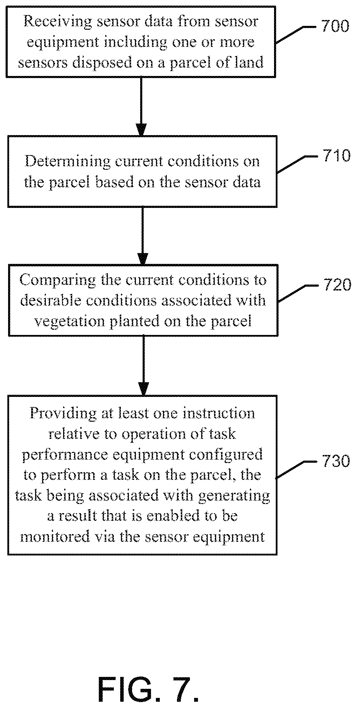

Embodiments of the present invention may therefore be practiced using an apparatus such as the one depicted in FIG. 1. However, other embodiments may be practiced in connection with a computer program product for performing embodiments of the present invention. As such, for example, each block or step of the flowcharts of FIG. 7, and combinations of blocks in the flowchart, may be implemented by various means, such as hardware, firmware, processor, circuitry and/or another device associated with execution of software including one or more computer program instructions. Thus, for example, one or more of the procedures described above may be embodied by computer program instructions, which may embody the procedures described above and may be stored by a storage device (e.g., memory 114) and executed by processing circuitry (e.g., processor 112).

As will be appreciated, any such stored computer program instructions may be loaded onto a computer or other programmable apparatus (i.e., hardware) to produce a machine, such that the instructions which execute on the computer or other programmable apparatus implement the functions specified in the flowchart block(s) or step(s). These computer program instructions may also be stored in a computer-readable medium comprising memory that may direct a computer or other programmable apparatus to function in a particular manner, such that the instructions stored in the computer-readable memory produce an article of manufacture including instructions to implement the function specified in the flowchart block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart block(s) or step(s). In this regard, a method according to example embodiments of the invention may include any or all of the operations shown in FIG. 7. Moreover, other methods derived from the descriptions provided herein may also be performed responsive to execution of steps associated with such methods by a computer programmed to be transformed into a machine specifically configured to perform such methods.

In an example embodiment, a method for providing smart garden management, as shown in FIG. 7, may include receiving sensor data from sensor equipment including one or more sensors disposed on a parcel of land at operation 700, determining current conditions on the parcel based on the sensor data at operation 710, comparing the current conditions to desirable conditions associated with vegetation planted on the parcel of land at operation 720, and providing at least one instruction relative to operation of task performance equipment configured to perform a task on the parcel, the task being associated with generating a result that is enabled to be monitored via the sensor equipment at operation 730.

In an example embodiment, an apparatus for performing the method of FIG. 7 above may comprise a processor (e.g., the processor 112) configured to perform some or each of the operations (700-730) described above. The processor 112 may, for example, be configured to perform the operations (700-730) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 700-730 may comprise, for example, the yard maintenance manager 40. Additionally or alternatively, at least by virtue of the fact that the processor 112 may be configured to control or even be embodied as the yard maintenance manager 40, the processor 112 and/or a device or circuitry for executing instructions or executing an algorithm for processing information as described above may also form example means for performing operations 700-730.

In some embodiments, additional optional operations may be included or the operations described above may be modified or augmented. Each of the additional operations, modification or augmentations may be practiced in combination with the operations above and/or in combination with each other. Thus, some, all or none of the additional operations, modification or augmentations described herein may be utilized in some embodiments. In this regard, in some cases, one or more sensors and task performance equipment employed in the method may be disposed within a predetermined distance of each other so that each may receive power from a same source. In some cases, the one or more sensors that are employed in the method may be powered from local sources such as battery or solar cells. In an example embodiment, the one or more sensors and the task performance equipment employed in the method may be in communication with a yard maintenance manager via wireless communication facilitated by a communication hub. In some examples, the parcel may be divided into a plurality of zones and each zone may be associated with at least one sensor and at least one device of the task performance equipment. In some cases, the yard maintenance manager may include processing circuitry storing map data descriptive of the parcel and each of the zones is defined by a corresponding geographic description relative to the map data. In an example embodiment, each of the zones may be associated with plant data corresponding to at least one plant within a respective one of the zones, and the plant data may define desirable parameters for growth of the at least one plant. In some embodiments, the yard maintenance manager may compare the measured conditions from the at least one sensor of a particular zone to the plant data associated with the particular zone to determine whether to control the task performance equipment relative to the particular zone to alter conditions in the particular zone. In an example embodiment, the sensor equipment and the task performance equipment may be fixed within the parcel. In an example embodiment, the yard maintenance manager may be configured to synchronize or sequence operation of different types of devices of the task performance equipment. In some cases, the yard maintenance manager communicates with the sensor equipment or the task performance equipment via a communication network for automated control over the task performance equipment. In some examples, the yard maintenance manager communicates with an operator via a remote terminal to suggest operator interaction with the task performance equipment. In an example embodiment, the sensor equipment receives power and a sprinkler component of the task performance equipment receives water via an integrated electric and water provision system.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A system comprising:
sensor equipment including one or more sensors adapted to be disposed on a parcel of land;
task performance equipment configured to perform a task on the parcel, the task being associated with generating a result that is enabled to be monitored via the sensor equipment; and
a yard maintenance manager configured to interface with the sensor equipment and the task performance equipment to compare measured conditions with desirable conditions to direct operation of the task performance equipment,
wherein the parcel is divided into a plurality of zones and each zone is associated with at least one sensor and at least one device of the task performance equipment,
and wherein the yard maintenance manager comprises processing circuitry storing map data descriptive of the parcel and each of the zones is defined by a corresponding geographic description relative to the map data.
**characterized in that**,
the yard maintenance manager is configured to synchronize or sequence operation of the task performance equipment with at least one device that is a different type of task performance equipment,
an application adapted to be used by an owner/operator is configured to facilitate an identification of plants associated with each zone or growing conditions desired for each zone,
wherein the task performance equipment is listed in a resource list associated with each zone for which the equipment may provide services, so that the processing circuitry either directly operates assets from the resource list to achieve a desired outcome or may provide instructions or suggestions to the owner/operator regarding the assets from the resource list that could be employed to achieve a desired outcome based on a comparison of the measured or current conditions to the growing condition parameters associated with the plants in the zone.

2. The system of claim 1, wherein the one or more sensors and at least one device of the task performance equipment that is within a predetermined distance thereof receive power from a same source.

3. The system of claim 1, wherein each of the zones is associated with plant data corresponding to at least one plant within a respective one of the zones, and wherein the plant data defines desirable parameters for growth of the at least one plant.

4. The system of claim 3, wherein the yard maintenance manager compares the measured conditions from the at least one sensor of a particular zone to the plant data associated with the particular zone to determine whether to control the task performance equipment relative to the particular zone to alter conditions therein.

5. The system of claim 1, wherein the sensor equipment and the task performance equipment are fixed within the parcel.

6. The system of claim 1, wherein the yard maintenance manager communicates with the sensor equipment or the task performance equipment via a communication network for automated control over the task performance equipment.

7. The system of claim 1, wherein the yard maintenance manager communicates with an operator via a remote terminal to suggest operator interaction with the task performance equipment.

8. The system of claim 1, wherein the sensor equipment at least receives power and a sprinkler component of the task performance equipment at least receives water via an integrated electric and water provision system.

9. A method comprising:
receiving sensor data from sensor equipment including one or more sensors disposed on a parcel of land;
determining current conditions on the parcel based on the sensor data;
comparing the current conditions to desirable conditions associated with vegetation planted on the parcel of land; and
providing at least one instruction relative to operation of task performance equipment configured to perform a task on the parcel, the task being associated with generating a result that is enabled to be monitored via the sensor equipment,
wherein the parcel is divided into a plurality of zones and each zone is associated with at least one sensor and at least one device of the task performance equipment,
and wherein the yard maintenance manager comprises processing circuitry configured to store map data descriptive of the parcel and each of the zones is defined by a corresponding geographic description relative to the map data,
**characterized in that**
at least one instruction comprises synchronizing or sequencing operation of the task performance equipment with at least one device that is a different type of task performance equipment is provided,
an application adapted to be used by an owner/operator is configured to facilitate an identification of plants associated with each zone or growing conditions desired for each zone,
wherein the task performace equipment is listed in a resource list associated with each zone for which the equipment may provide services, so that the processing circuitry either directly operates assets from the resource list to achieve a desired outcome or may provide instructions or suggestions to the owner/operator regarding the assets from the resource list that could be employed to achieve a desired outcome based on a comparison of the measured or current contitions to the growing condition parameters associated with the plants in the zone.

10. The method of claim 9, wherein sensors of the sensor equipment and at least one device of the task performance equipment are provided within a predetermined distance of each other and receive power from a same source.

11. The method of claim 9, wherein the parcel is divided into a plurality of zones and each zone is associated with at least one sensor and at least one device of the task performance equipment.

12. The method of claim 11, wherein each of the zones is associated with plant data corresponding to at least one plant within a respective one of the zones, and wherein the plant data defines desirable parameters for growth of the at least one plant.

13. The method of claim 12, wherein the yard maintenance manager compares the measured conditions from the at least one sensor of a particular zone to the plant data associated with the particular zone to determine whether to control the task performance equipment relative to the particular zone to alter conditions therein.

14. The method of claim 9, further comprising enabling a yard maintenance manager to communicate with an operator via a remote terminal to suggest operator interaction with the task performance equipment.

15. The method of claim 9, wherein the sensor equipment at least receives power and a sprinkler component of the task performance equipment at least receives water via an integrated electric and water provision system.

## Patentansprüche

1. System, umfassend:
Sensorausrüstung enthaltend einen oder mehrere Sensoren, die angepasst sind, um auf einer Landparzelle angeordnet zu sein;
Aufgabenausführungsausrüstung, die eingerichtet ist, um eine Aufgabe auf der Parzelle auszuführen, wobei die Aufgabe mit dem Erzeugen eines Ergebnisses verbunden ist, das über die Sensorausrüstung überwacht werden kann; und
einen Yard-Maintenance-Manager (*yard maintenance manager*), der eingerichtet ist, um sich über eine Schnittstelle mit der Sensorausrüstung und der Aufgabenausführungsausrüstung zu verbinden, um gemessene Bedingungen mit gewünschten Bedingungen zum direkten Betrieb der Aufgabenausführungsausrüstung zu vergleichen,
wobei die Parzelle in eine Vielzahl von Zonen unterteilt ist und jede Zone mindestens einem Sensor und mindestens einem Gerät der Aufgabenausführungsausrüstung zugeordnet ist,
und wobei der Yard-Maintenance-Manager eine Verarbeitungsschaltung umfasst, die Kartendaten speichert, die für die Parzelle beschreibend sind, und jede der Zonen durch eine entsprechende geografische Beschreibung in Bezug auf die Kartendaten definiert ist,
**dadurch gekennzeichnet, dass**,
der Yard-Maintenance-Manager eingerichtet ist, um den Betrieb der Aufgabenausführungsausrüstung mit mindestens einem Gerät zu synchronisieren oder zu sequenzieren, das eine andere Art von Aufgabenausführungsausrüstung ist,
eine Anwendung, die angepasst ist um von einem Eigentümer/Betreiber verwendet zu werden, eingerichtet ist, um eine Identifizierung von zu jeder Zone zugeordneten Pflanzen oder die für jede Zone gewünschten Wachstumsbedingungen zu erleichtern,
wobei die Aufgabenausführungsausrüstung in einer Ressourcenliste aufgeführt ist, die jeder Zone zugeordnet ist, für die die Ausrüstung Dienstleistungen erbringen kann, so dass die Verarbeitungsschaltung entweder direkt Posten aus der Ressourcenliste betreibt, um ein gewünschtes Ergebnis zu erzielen, oder Anweisungen oder Vorschläge an den Eigentümer/Betreiber bezüglich der Posten aus der Ressourcenliste geben kann, die angewendet werden könnten, um ein gewünschtes Ergebnis basierend auf einem Vergleich der gemessenen oder aktuellen Bedingungen mit den Parametern der Wachstumsbedingungen der zugeordneten Pflanzen in der Zone zu erzielen.

2. System nach Anspruch 1, wobei der eine oder die mehreren Sensoren und mindestens ein Gerät der Aufgabenausführungsausrüstung, das sich innerhalb eines vorbestimmten Abstands davon befindet, Strom von einer gleichen Quelle empfangen.

3. System nach Anspruch 1, wobei jede der Zonen mit Pflanzendaten verknüpft ist, die mindestens einer Pflanze innerhalb einer der Zonen entsprechen, und wobei die Pflanzendaten gewünschte Parameter für das Wachstum der mindestens einen Pflanze definieren.

4. System nach Anspruch 3, wobei der Yard-Maintenance-Manager die gemessenen Bedingungen von dem mindestens einen Sensor einer bestimmten Zone mit den der bestimmten Zone zugeordneten Pflanzendaten vergleicht, um zu bestimmen, ob die Aufgabenausführungsausrüstung in Bezug auf die bestimmte Zone gesteuert werden soll, um die Bedingungen darin zu ändern.

5. System nach Anspruch 1, wobei die Sensorausrüstung und die Aufgabenausführungsausrüstung innerhalb der Parzelle befestigt sind.

6. System nach Anspruch 1, wobei der Yard-Maintenance-Manager mit der Sensorausrüstung oder der Aufgabenausführungsausrüstung über ein Kommunikationsnetzwerk zur automatisierten Steuerung der Aufgabenausführungsausrüstung kommuniziert.

7. System nach Anspruch 1, wobei der Yard-Maintenance-Manager mit einem Bediener über ein Remote-Terminal kommuniziert, um eine Interaktion des Bedieners mit der Aufgabenausführungsausrüstung vorzuschlagen.

8. System nach Anspruch 1, wobei die Sensorausrüstung zumindest Strom erhält und eine Sprinklerkomponente der Aufgabenausführungsausrüstung zumindest Wasser über ein integriertes Strom- und Wasserversorgungssystem erhält.

9. Verfahren, umfassend:
Empfangen von Sensordaten von einer Sensorausrüstung, die einen oder mehrere Sensoren mit einschließt, die auf einer Landparzelle angeordnet sind;
Bestimmen der aktuellen Bedingungen auf der Parzelle basierend auf den Sensordaten;
Vergleichen der aktuellen Bedingungen mit den gewünschten Bedingungen im Zusammenhang mit der Vegetation auf der Parzelle; und
Bereitstellen mindestens einer Anweisung in Bezug auf den Betrieb einer Aufgabenausführungsausrüstung, die eingerichtet ist, um eine Aufgabe auf der Parzelle auszuführen, wobei die Aufgabe mit dem Erzeugen eines Ergebnisses verbunden ist, das über die Sensorausrüstung überwacht werden kann,
wobei die Parzelle in eine Vielzahl von Zonen unterteilt ist und jede Zone mindestens einem Sensor und mindestens einem Gerät der Aufgabenausführungsausrüstung zugeordnet ist,
und wobei der Yard-Maintenance-Manager eine Verarbeitungsschaltung umfasst, die Kartendaten speichert, die für die Parzelle beschreibend sind, und jede der Zonen durch eine entsprechende geografische Beschreibung in Bezug auf die Kartendaten definiert ist,
**dadurch gekennzeichnet, dass**
mindestens eine Anweisung das Synchronisieren oder Sequenzieren des Betriebs der Aufgabenausführungsausrüstung mit mindestens einem Gerät, das eine andere Art von Aufgabenausführungsausrüstung ist, umfasst,
eine Anwendung, die angepasst ist um von einem Eigentümer/Betreiber verwendet zu werden, eingerichtet ist, um eine Identifizierung von zu jeder Zone zugeordneten Pflanzen oder die für jede Zone gewünschten Wachstumsbedingungen zu erleichtern,
wobei die Aufgabenausführungsausrüstung in einer Ressourcenliste aufgeführt ist, die jeder Zone zugeordnet ist, für die die Ausrüstung Dienstleistungen erbringen kann, so dass die Verarbeitungsschaltung entweder direkt Posten aus der Ressourcenliste betreibt, um ein gewünschtes Ergebnis zu erzielen, oder Anweisungen oder Vorschläge an den Eigentümer/Betreiber bezüglich der Posten aus der Ressourcenliste geben kann, die angewendet werden könnten, um ein gewünschtes Ergebnis basierend auf einem Vergleich der gemessenen oder aktuellen Bedingungen mit den Parametern der Wachstumsbedingungen der zugeordneten Pflanzen in der Zone zu erzielen.

10. Verfahren nach Anspruch 9, wobei Sensoren der Sensorausrüstung und mindestens ein Gerät der Aufgabenausführungsausrüstung in einem vorbestimmten Abstand voneinander vorgesehen sind und Strom von einer gleichen Quelle empfangen.

11. Verfahren nach Anspruch 9, wobei die Parzelle in eine Vielzahl von Zonen unterteilt ist und jede Zone mindestens einem Sensor und mindestens einem Gerät der Aufgabenausführungsausrüstung zugeordnet ist.

12. Verfahren nach Anspruch 11, wobei jede der Zonen mit Pflanzendaten verknüpft ist, die mindestens einer Pflanze innerhalb einer der Zonen entsprechen, und wobei die Pflanzendaten gewünschte Parameter für das Wachstum der mindestens einen Pflanze definieren.

13. Verfahren nach Anspruch 12, wobei der Yard-Maintenance-Manager die gemessenen Bedingungen von dem mindestens einen Sensor einer bestimmten Zone mit den der bestimmten Zone zugeordneten Pflanzendaten vergleicht, um zu bestimmen, ob die Aufgabenausführungsausrüstung in Bezug auf die bestimmte Zone gesteuert werden soll, um die Bedingungen darin zu ändern.

14. Verfahren nach Anspruch 9, des Weiteren umfassend das Ermöglichen, dass ein Yard-Maintenance-Manager mit einem Bediener über ein Remote-Terminal kommuniziert, um eine Interaktion des Bedieners mit der Aufgabenausführungsausrüstung vorzuschlagen.

15. Verfahren nach Anspruch 9, wobei die Sensorausrüstung zumindest Strom erhält und eine Sprinklerkomponente der Aufgabenausführungsausrüstung zumindest Wasser über ein integriertes Strom- und Wasserversorgungssystem erhält.

## Revendications

1. Système comprenant:
équipement de capteurs comprenant un ou plusieurs capteurs adaptés pour être disposés sur une parcelle de terrain;
équipement d'exécution des tâches configuré pour exécuter une tâche sur la parcelle, la tâche étant associée à générer un résultat qui peut être surveillé par l'équipement de capteurs; et
un gestionnaire d'entretien de la cour configuré pour s'interfacer avec l'équipement de capteurs et l'équipement d'exécution des tâches pour comparer conditions mesurées avec conditions souhaitables pour diriger le fonctionnement de l'équipement d'exécution des tâches,
dans lequel la parcelle est divisée en une pluralité de zones et chaque zone est associée à au moins un capteur et au moins un dispositif de l'équipement d'exécution des tâches,
et dans lequel le gestionnaire d'entretien de la cour comprend des circuits de traitement stockant des données cartographiques descriptives de la parcelle et chacune des zones est définie par une description géographique correspondante par rapport aux données cartographiques.
**caractérisé en ce que**,
le gestionnaire d'entretien de la cour est configuré pour synchroniser ou séquencer le fonctionnement de l'équipement d'exécution des tâches avec au moins un dispositif qui est un type différent d'équipement d'exécution des tâches,
une application adaptée pour être utilisée par un propriétaire/exploitant est configuré pour faciliter l'identification des plantes associées à chaque zone ou des conditions de croissance souhaitées pour chaque zone,
dans lequel l'équipement d'exécution des tâches est énuméré dans une liste de ressources associée à chaque zone pour laquelle l'équipement peut fournir des services, de sorte que le circuit de traitement utilise directement des actifs de la liste de ressources pour atteindre un résultat souhaité ou peut fournir des instructions ou des suggestions au propriétaire/opérateur concernant les actifs de la liste de ressources qui pourraient être utilisés pour atteindre un résultat souhaité en comparant les conditions actuelles ou mesurées aux paramètres des conditions de croissance associés aux usines dans cette zone.

2. Système selon la revendication 1, dans lequel le un ou plusieurs capteurs et au moins un dispositif de l'équipement d'exécution des tâches qui se trouve à une distance prédéterminée de celui-ci sont alimentés par une même source.

3. Système selon la revendication 1, dans lequel chacune des zones est associée à des données de plantes correspondant à au moins une plante dans une des zones respectives, et dans lequel les données de plantes définissent des paramètres souhaitables pour la croissance de l'au moins une plante.

4. Système selon la revendication 3, dans lequel le gestionnaire d'entretien de cour compare les conditions mesurées d'au moins un capteur d'une zone particulière aux données de l'installation associées à la zone particulière pour déterminer s'il faut commander l'équipement d'exécution de tâche relatif à la zone particulière pour modifier les conditions dans celle-ci.

5. Système selon la revendication 1, dans lequel l'équipement de capteurs et l'équipement d'exécution des tâches sont fixés dans la parcelle.

6. Système selon la revendication 1, dans lequel le gestionnaire d'entretien de la cour communique avec l'équipement capteur ou l'équipement d'exécution des tâches via un réseau de communication pour un contrôle automatisé de l'équipement d'exécution des tâches.

7. Système selon la revendication 1, dans lequel le gestionnaire d'entretien de la cour communique avec un opérateur par l'intermédiaire d'un terminal à distance pour suggérer l'interaction de l'opérateur avec l'équipement d'exécution des tâches.

8. Système selon la revendication 1, dans lequel l'équipement de capteurs reçoit au moins de l'énergie et une composante sprinkler de l'équipement d'exécution des tâches reçoit au moins de l'eau par l'intermédiaire d'un système intégré d'alimentation électrique et en eau.

9. Procédé comprenant les étapes consistant à:
recevoir des données de capteurs provenant d'un équipement de capteurs comprenant un ou plusieurs capteurs disposés sur une parcelle de terrain;
déterminer les conditions actuelles sur la parcelle en se basant sur les données du capteur;
comparer les conditions actuelles aux conditions souhaitables associées à la végétation plantée sur la parcelle de terrain; et
fournir au moins une instruction relative au fonctionnement d'un équipement d'exécution de tâche configuré pour exécuter une tâche sur la parcelle, la tâche étant associée à générer un résultat qui peut être surveillé par l'équipement de capteurs,
dans lequel la parcelle est divisée en une pluralité de zones et chaque zone est associée à au moins un capteur et au moins un dispositif de l'équipement d'exécution des tâches,
et dans lequel le gestionnaire d'entretien de la cour comprend des circuits de traitement configurés pour stocker données cartographiques descriptives de la parcelle et chacune des zones est définie par une description géographique correspondante par rapport aux données cartographiques,
**caractérisé en ce que**
au moins une instruction comprend la synchronisation ou le séquencement du fonctionnement de l'équipement d'exécution des tâches avec au moins un dispositif qui est un type différent d'équipement d'exécution des tâches est fourni,
une application adaptée pour être utilisée par un propriétaire/exploitant est configuré pour faciliter l'identification des plantes associées à chaque zone ou des conditions de croissance souhaitées pour chaque zone,
dans lequel l'équipement d'exécution des tâches est énuméré dans une liste de ressources associée à chaque zone pour laquelle l'équipement peut fournir des services, de sorte que le circuit de traitement utilise directement des actifs de la liste de ressources pour atteindre un résultat souhaité ou peut fournir des instructions ou des suggestions au propriétaire/opérateur concernant les actifs de la liste de ressources qui pourraient être utilisés pour atteindre un résultat souhaité en comparant les conditions actuelles ou mesurées aux paramètres des conditions de croissance associés aux usines dans cette zone.

10. Procédé selon la revendication 9, dans lequel des capteurs de l'équipement de capteurs et au moins un dispositif de l'équipement d'exécution de tâche sont prévus à une distance prédéterminée les uns des autres et reçoivent de l'énergie d'une même source.

11. Procédé selon la revendication 9, dans lequel la parcelle est divisée en plusieurs zones et chaque zone est associée à au moins un capteur et au moins un dispositif de l'équipement d'exécution de tâche.

12. Procédé selon la revendication 11, dans lequel chacune des zones est associée à des données de plantes correspondant à au moins une plante dans une des zones respectives, et dans lequel les données de plantes définissent des paramètres souhaitables pour la croissance de l'au moins une plante.

13. Procédé selon la revendication 12, dans lequel le gestionnaire d'entretien de cour compare les conditions mesurées d'au moins un capteur d'une zone particulière aux données de l'usine associées à la zone particulière pour déterminer s'il faut commander l'équipement d'exécution de tâche relatif à la zone particulière pour y modifier les conditions.

14. Procédé selon la revendication 9, comprenant en outre le fait de permettre à un gestionnaire d'entretien de la cour de communiquer avec un opérateur par l'intermédiaire d'un terminal à distance pour suggérer une interaction de l'opérateur avec l'équipement d'exécution des tâches.

15. Procédé selon la revendication 9, dans lequel l'équipement de capteurs reçoit au moins de l'énergie et une composante sprinkler de l'équipement d'exécution des tâches reçoit au moins de l'eau par l'intermédiaire d'un système intégré d'alimentation électrique et en eau.
